# EUROPÄISCHE PATENTSCHRIFT

(11) **EP 0 652 500 B1**
(45) Veröffentlichungstag und Bekanntmachung des Hinweises auf die Patenterteilung: **29.07.1998**
(21) Anmeldenummer: 94116918.7
(22) Anmeldetag: 26.10.1994
(51) Int. Cl.: G05D 11/13

(54) **Verfahren und Einrichtung zur Dosierung eines Reaktanten in ein Strömungsmedium**
A device and method for dosing reagent in a fluid
Procédé et dispositif de dosage d'un réactif dans un fluide

(30) Priorität: 04.11.1993 DE 4337664
(43) Veröffentlichungstag der Anmeldung: 10.05.1995
(73) Patentinhaber: SIEMENS AKTIENGESELLSCHAFT, 80333 München (DE)
(72) Erfinder: Schmelz, Helmut, Dr., D-83209 Prien (DE)

(56) Entgegenhaltungen:
- EP-A- 0 362 483
- EP-A- 0 381 236
- DD-A- 268 629
- DE-A- 3 606 535
- DE-A- 4 217 552

## Beschreibung

Die Erfindung bezieht sich auf ein Verfahren und eine Einrichtung zur Dosierung eines Reaktanten in ein Strömungsmedium, beispielsweise zur Zudosierung von Ammoniak bei der katalytischen Umsetzung von in einem Ab- oder Rauchgas enthaltenen Stickoxiden mit Ammoniak.

Bei der katalytischen Umsetzung von mindestens zwei Reaktanten eines Strömungsmediums ist es zur Erreichung hoher Abscheidegrade bei gleichzeitig vernachlässigbarem Schlupf der Reaktanten erforderlich, die Reaktanten in einem geeigneten stöchiometrischen Verhältnis zueinander an einem Katalysator bereitzustellen. Für die katalytische Umsetzung von in einem Ab- oder Rauchgas enthaltenen Stickoxiden nach dem Verfahren der selektiven katalytischen Reduktion (SCR) mit Ammoniak als Reduktionsmittel ist es beispielsweise erforderlich, daß Stickoxide und Ammoniak im zeitlichen Mittel zu etwa gleichen Teilen am Katalysator vorliegen.

Die Einstellung des erforderlichen stöchiometrischen Verhältnisses von Stickoxiden zu Ammoniak oder zu einer in Ammoniak umwandelbaren Substanz, wie z. B. Harnstoff, ist nur zufriedenstellend durchführbar, wenn die Stickoxidkonzentration im Ab- oder Rauchgas gemessen oder über eine Kennfelddiagnose vergleichsweise genau bestimmt werden kann.

Die Messung der Stickoxidkonzentration erfordert jedoch einen vergleichsweise hohen Aufwand und verursacht vergleichsweise hohe Kosten. Solche Messungen können daher beispielsweise nur bei großflächigen SCR-Anlagen in Kraftwerken durchgeführt werden, wobei jedoch auch hier ein lokaler Schlupf von Ammoniak in Folge von Stickoxid-Schieflagen nur unbefriedigend verhindert werden kann. Eine Vermeidung des Schlupfes von Ammoniak ist jedoch unter allen Umständen anzustreben, da Ammoniak giftig ist und bereits in äußerst geringer Konzentration eine Geruchsbelästigung für den Menschen darstellt (Geruchsschwelle etwa 5 ppm).

Weil sich die Stickoxidkonzentration in Rauchgasen von Kraftwerken, die mit fossilen Brennstoffen betrieben werden, aufgrund von sich nur zeitlich langsam vollziehenden Lastwechseln ebenfalls nur langsam ändert, wird in Kraftwerken eine Ammoniakdosierung anhand von Stickoxid- und Stickoxidschlupfmessungen mit relativ großen Zeitkonstanten durchgeführt. Damit ist die Ammoniakdosierung für Rauchgase mit sich nur zeitlich langsam vollziehenden Änderungen der Stickoxidkonzentration einigermaßen zufriedenstellend gelöst.

Bedeutend schwieriger ist die Entstickung von Abgasen, die von Diesel- und Magermotoren emittiert werden. Ein für Dieselmotoren bestimmtes System mit einem geregelten Dieselkatalysator (GDK), das bezüglich der Stickoxidminderung ebenfalls nach dem SCR-Verfahren arbeitet, muß aufgrund der unterschiedlichen Betriebszustände und schnellen Lastwechsel dieser Motoren für die daraus resultierenden großen Schwankungen des Abgasvolumenstroms, der Abgastemperatur und der Stickoxidkonzentration im Abgas ausgelegt sein. Weil Ammoniak aufgrund seiner Gefährlichkeit nicht selbst in Fahrzeugen, wie z. B. Pkw, Lastkraftwagen, Omnibussen, Lokomotiven und Schiffen, mitgeführt werden kann, wird das notwendige Reduktionsmittel stattdessen beispielsweise in Form einer wäßrigen Harnstofflösung im Fahrzeug mitgeführt, aus der Ammoniak nur in der idealerweise augenblicklich gerade benötigten Menge erzeugt wird.

Weil der Einsatz der derzeit bekannten Stickoxidsensoren in Fahrzeugen aufgrund des hohen Aufwands und der hohen Kosten äußerst unwahrscheinlich ist, versucht man, die pro Zeiteinheit vom Motor erzeugten Stickoxide durch Kennfeldvergleich zu ermitteln, diesen abgerufenen oder berechneten Stickoxidmengen entsprechend Reduktionsmittel zuzudosieren und die Abscheideleistung des Katalysators in einem On-Board-Diagnosesystem zu simulieren (vergleiche beispielsweise die deutsche nicht vorveröffentlichte Offenlegungsschrift DE-A-43 15 278.3 offengelegt am 10.11.94). Bei einer entsprechenden Ausgestaltung des Katalysators, d. h. bei geeigneter Ad- und Desorptionscharakteristik des Katalysators, beispielsweise gemäß EP-A-617 199 (erwähnt unte Art. 54(3) EPÜ), ist die Zudosierung von Ammoniak in die Abgase von Diesel- und Magermotoren mit sich zeitlich rasch vollziehenden Änderungen der Stickoxidkonzentration einigermaßen zufriedenstellend gelöst.

DE 42 17 552 C1 bezieht sich auf eine Abgasnachbehandlungseinrichtung für Verbrennungsmotoren mittels eines SCR-Katalysators, wobei ein erster Ammoniak-Sensor zur Detektion von Ammoniak in der Gasphase und ein zweiter Ammoniak-Sensor zur Detektion von im Katalysator absorbiertem Ammoniak vorgesehen sind. Die Menge des dem Abgas zudosierten Ammoniaks wird dabei derart gesteuert, daß bei Überschreiten einer oberen Grenze an gasförmigem Ammoniak - detektiert durch den ersten Ammoniak-Sensor - die Zufuhr an Ammoniak unterbrochen wird, und bei Vorliegen einer unteren Füllstandsgrenze an Ammoniak im Katalysator - detektiert durch den zweiten Ammoniak-Sensor - erneut Ammoniak zugegeben wird. Dieses Konzept erlaubt es, eine auf Kennfeldbasis vorgenommene Berechnung des Füllstandes im Katalysator während der Dosierunterbrechung der Ammoniak-Zugabe zu vermeiden.

Es muß aber konstatiert werden, daß es für die Zudosierung des Ammoniaks bei einem SCR- oder GDK-System bislang keine geeignete Kontrollmöglichkeit gibt, wodurch im Fall eines Defekts beispielsweise am Katalysator oder am Dosierventil Belästigungen durch überhöhten Ammoniakschlupf auftreten können.

Der Erfindung liegt daher die Aufgabe zugrunde, ein Verfahren und eine Einrichtung zur Zudosierung eines Reaktanten, wie z. B. Ammoniak, in ein Strömungsmedium anzugeben, mit denen es möglich ist, die Konzentration des Reaktanten, wie z. B. Ammoniak, in einem für die katalytische Umsetzung des Reaktanten mit mindestens einem weiteren im Strömungsmedium enthaltenen Reaktanten, wie z.B. Stickoxiden, vorteilhaften Verhältnis zueinander einzustellen.

Bezüglich des Verfahrens wird diese Aufgabe erfindungsgemäß dadurch gelöst, daß eine pro Zeiteinheit in das Strömungsmedium zuzudosierende Menge des Reaktanten in Abhängigkeit von der Dicke einer Reaktionszone in einem katalytisch aktiven Material eingestellt wird, wobei diese Dicke erfaßt wird.

Hierbei wird der Reaktant nach erfolgter Adsorption an dem katalytisch aktiven Material zusammen mit mindestens einem weiteren Reaktanten des Strömungsmediums umgesetzt. Dabei ist die Dicke der Reaktionszone als die Tiefe im katalytisch aktiven Material definiert, bei der der Verlauf der Konzentration des am katalytisch aktiven Material adsorbierten Reaktanten ein lokales Minimum durchläuft.

Bezüglich der Einrichtung wird die Aufgabe erfindungsgemäß dadurch gelöst, daß eine Kontrolleinheit, dieser Kontrolleinheit zugeordnete Mittel zur Erfassung der Dicke der Reaktionszone und eine der Kontrolleinheit zugeordnete Dosiereinrichtung, mittels derer der Reaktant in Strömungsrichtung des Strömungsmediums vor dem Katalysator in das Strömungsmedium einbringbar ist, vorgesehen sind, und daß die Kontrolleinheit zur Einstellung einer mittels der Dosiereinrichtung pro Zeiteinheit in das Strömungsmedium zuzudosierende Menge des Reaktanten in Abhängigkeit von der Dicke der Reaktionszone vorgesehen ist.

Hierdurch wird erreicht, daß durch eine Beobachtung der Dicke der Reaktionszone, insbesondere der zeitlichen Abweichungen von einem Sollwert für die Dicke, eine rechtzeitige und detaillierte Aussage über die Konzentrationsverhältnisse der an der katalytischen Umsetzung beteiligten Reaktanten im Strömungsmedium möglich ist. In Konsequenz ist auf diese Weise eine Konzentrationseinstellung der Reaktanten zueinander in einem für die katalytische Umsetzung vorteilhaften stöchiometrischen Verhältnis erreichbar, was sich äußerst vorteilhaft auf die erreichbaren Abscheidegrade der Reaktanten bei der katalytischen Umsetzung auswirkt. Außerdem ist eine Möglichkeit geschaffen worden, die Dynamik der katalytischen Umsetzung zu überwachen. Hierdurch wird beispielsweise bei der katalytischen Umsetzung von Stickoxiden mit Ammoniak, der in das Strömungsmedium zudosiert wird, erreicht, Fehler bei der bisher üblichen Berechnung der zuzudosierenden Ammoniakmenge oder Defekte an der Dosiereinrichtung frühzeitig aufzuspüren, was zur Qualitätssicherung (hohe Abscheidegrade) und besonders zur Vermeidung eines Schlupfes von Ammoniak oder eines Leerfahrens des Katalysators beiträgt.

In besonders vorteilhafter Ausgestaltung der Erfindung wird in Strömungsrichtung des Strömungsmediums vor dem katalytisch aktiven Material die Konzentration des Reaktanten im Strömungsmedium angehoben oder abgesenkt, wenn die Dicke der Reaktionszone, insbesondere ausgehend von einem Sollwert für die Dicke, zu- bzw. abnimmt. Dieser Vorgang erlaubt eine gewünschte weitgehend stöchiometrische Einstellung der Reaktanten im Strömungsmedium. Wenn beispielsweise der eine Reaktant im Überschuß in Bezug zur Konzentration des anderen Reaktanten im Strömungsmedium vorhanden ist, wirkt sich dies durch eine zunehmende Adsorption dieses Reaktanten am katalytisch aktiven Material aus. Dies führt zu einer Abnahme der Dicke der Reaktionszone und damit zu einem zunehmend geringeren Eindringen des anderen Reaktanten in das katalytisch aktive Material, so daß der Katalysator zunehmend in Richtung eines Betriebszustandes "überlaufen" betrieben wird. Im Fall einer gänzlich verschwindenden Reaktionszone ist die Adsorptionsfähigkeit des katalytisch aktiven Materials für den im Überschuß vorhandenen Reaktanten erschöpft, so daß ein Schlupf dieses im Überschuß vorhandenen Reaktanten unvermeidbar ist. Andersherum führt eine unterstöchiometrische Zudosierung des ersten Reaktanten zu einer Zunahme der Dicke der Reaktionszone und damit zu einem Schlupf des anderen an der katalytischen Umsetzung beteiligten Reaktanten. Darüber hinaus kann auf diese Weise aber auch eine kurzfristige unter- oder überstöchiometrische Dosierung der Reaktanten eingestellt und überwacht werden, sofern dies für die katalytische Umsetzung der Reaktanten vorteilhaft ist.

Um zur Vermeidung eines Schlupfes eines der beiden Reaktanten das Adsorptionsvermögens des katalytisch aktiven Materials in vorteilhafter Weise ausschöpfen zu können, ist es zweckmäßig, die Mittel zur Erfassung der Dicke der Reaktionszone innerhalb eines Intervalls von 30 bis 90 %, vorzugsweise von 50 bis 70 %, bezogen auf die Länge des Katalysators, anzuordnen. Damit kann an dem katalytisch aktiven Material des Katalysators einerseits ein Überschuß des Reaktanten noch hinreichend vor dem Katalysatorende eingespeichert und damit eine Überversorgung mit dem Reaktanten rechtzeitig aufgefangen und andererseits bei einer zu starken Unterdosierung des zur katalytischen Umsetzung benötigten Reaktanten dieser noch rechtzeitig in seiner am katalytisch aktiven Material adsorbierten Form zur katalytischen Umsetzung aus dem Katalysator abgezogen werden.

Alternativ dazu können die Mittel zur Erfassung der Dicke der Reaktionszone am Eintritt des Strömungsmediums oder am Eintritt eines Teils des Strömungsmediums in den Katalysator und an dessen Austritt angeordnet werden. Auf diese Weise wird durch den Vergleich der Dicken der Reaktionszone in den am Eintritt und am Austritt angeordneten Mittel der Verlauf der katalytischen Umsetzung im Katalysator interpoliert.

Zur Anwendung des Verfahrens bei der katalytischen Umsetzung von Stickoxiden mit Ammoniak ist es vorteilhaft, wenn ein Material, in dem die Dicke der Reaktionszone erfaßt wird, auf einer Temperatur von 250 bis 550 °C gehalten wird. In diesem Temperaturbereich werden üblicherweise auch Katalysatoren zur katalytischen Umsetzung von Stickoxiden mit Ammoniak betrieben, so daß die Charakteristik bezüglich der Adsorption von Stickoxiden und Ammoniak des Materials, in dem die Dicke der Reaktionszone erfaßt wird, sofern dies Material nicht ohnehin katalytisch aktives Material ist, einfach an die Charakteristik des katalytisch aktiven Materials anpaßbar ist.

Ausführungsbeispiele der Erfindung werden anhand von fünf Figuren näher erläutert. Dabei zeigen:
- Figur 1: in schematischer Darstellung eine Abgasleitung eines 300 kW-ladeluftgekühlten Dieselmotors mit einer erfindungsgemäßen Dosierung eines Reaktanten in ein stickoxidhaltiges Abgas;
- Figur 2: in Vergrößerung den in Figur 1 eingezeichneten Katalysator;
- Figur 3: einen gegenüber der Figur 2 geringfügig abgewandelten Katalysator;
- Figur 4: einen gegenüber den Figuren 2 und 3 geringfügig abgewandelten Katalysator mit einer Bypaßstrecke; und
- Figur 5: einen qualitativen Verlauf der Konzentration des am Katalysatormaterial adsorbierten Ammoniaks in Abhängigkeit von der Materialtiefe für verschiedene Ammoniak- und Stickoxid-Konzentrationen in dem Abgas.

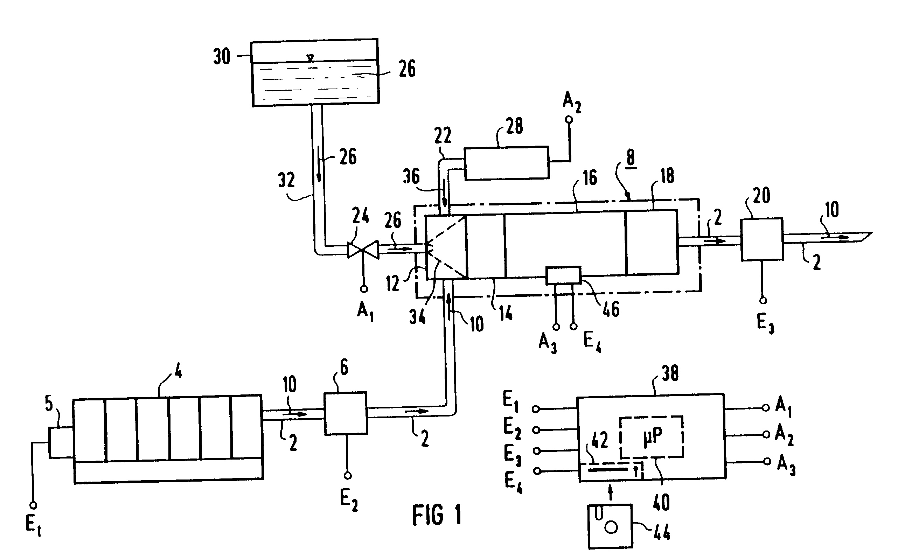

Figur 1 zeigt in schematischer Darstellung die Abgasleitung 2 eines 300 kW-ladeluftgekühlten Dieselmotors 4 mit einer an den Dieselmotor 4 angeschlossenen Meßstelle 5. In der Abgasleitung 2 sind der Reihe nach eine Meßstelle 6, ein Katalysator 8 und eine weitere Meßstelle 20 eingebaut. In Strömungsrichtung des Abgases 10 umfaßt der Katalysator 8 der Reihe nach eine Einlaufkammer 12, einen Hydrolysekatalysator 14, einen DeNOₓ-Katalysator 16 und einen Oxidationskatalysator 18.Außer der Abgasleitung 2 sind an die Einlaufkammer 12 eine Blaubrennerabgasleitung 22 und ein einstellbares Eindüsventil 24 für ein Reduktionsmittel 26 angeschlossen. Über die Blaubrennerabgasleitung 22 wird bedarfsweise das heiße Abgas 36 eines Blaubrenners 28 in die Einlaufkammer 12 eingeleitet. Das Reduktionsmittel 26, im Ausführungsbeispiel eine wäßrige Harnstofflösung, ist in einem Reduktionsmitteltank 30 bevorratet. Es wird über eine Reduktionsmittelzuführungsleitung 32 dem Eindüsventil 24 zugeführt. Mittels des Eindüsventils 24 wird das Reduktionsmittel 26 innerhalb einer von Lochblechen 34 gegen die Wandungen der Einlaufkammer 12 begrenzten Zone in die Einlaufkammer 12 eingedüst. Das Abgas 10 und gegebenenfalls das Blaubrennerabgas 36 treten außerhalb dieser Zone in die Einlaufkammer 12 ein, durchdringen die Löcher in den Lochblechen 34 und reißen dabei das in die Einlaufkammer 12 eingedüste Reduktionsmittel 26 mit sich. Hierdurch wird verhindert, daß sich das Reduktionsmittel 26 auf den Wänden der Einlaufkammer 12 nachteiligerweise absetzt.

Zur Einstellung der in das Abgas 10 pro Zeiteinheit einzudosierenden Reduktionsmittelmenge ist eine Kontrolleinheit 38 mit einer Mikroprozessoruntereinheit 40 vorgesehen. Über Eingänge El bis E4 erfaßt die Kontrolleinheit 38 betriebsrelevante Parameter, deren Kenntnis zu einer geeigneten Einstellung der pro Zeiteinheit einzudosierenden Reduktionsmittelmenge erforderlich sind. Mittels der Meßstelle 5, die eine Reihe von Sensoren umfaßt, werden der Luftmassenstrom, der Regelstangenweg (Gaspedalstellung), der Ladedruck und die Drehzahl des Motors 4 erfaßt. Diese Daten liegen am Eingang El an. Am Eingang E2 liegen die mittels der Meßstelle 6 gemessenen betriebsrelevanten Parameter des Abgases 10, hier dessen Temperatur, Druck und Massenstrom, an. Im Ausführungsbeispiel werden der Massenstrom und der Druck des Abgases 10 aus den am Eingang El vorliegenden betriebsrelevanten Parametern des Motors 4 berechnet. Es wäre auch möglich, den Druck und auch den Massenstrom über separate Sensoren in der Meßstelle 6 zu messen. Am Eingang E3 liegt die mittels der weiteren Meßstelle 20 hinter dem Katalysator 8 gemessene Temperatur des Abgases 10 an. Am Eingang E4 liegen die mit einem Sensor 46 gemessenen Daten zur Bestimmung der Temperatur des Sensor 46 und zur Bestimmung der Dicke einer Reaktionszone in dem Sensormaterial des Sensors 46 an.

Der Sensor 46 umfaßt mehrere hier nicht weiter dargestellte Kontaktpaare, die über einen Ausgang A3 der Kontrolleinheit 38 mit einer Gleichspannung oder einer periodisch umgepolten Gleichspannung oder einer Wechselspannung beaufschlagbar sind. Auf diese Weise kann der Tiefenverlauf des am Sensormaterial adsorbierten Ammoniaks über die Messung partieller spezifischer Leitfähigkeiten des Sensormaterials bestimmt werden.

Betriebsrelevante Parameter des Katalysators 8, wie z. B. der Druck- und Temperaturverlauf der katalytischen Aktivität, die druck- und temperaturabhängige spezifische Speicherkapazität für das Reduktionsmittel 26 sowie physikalische Größen, wie z. B. Gewicht der katalytisch aktiven Masse, Geometrie und Wärmeübergang, können beispielsweise auf einer Bypackdiskette 44 zum Katalysator 8 abgelegt sein. Diese Parameter können mittels eines Diskettenlaufwerks 42, das in der Kontrolleinheit 38 eingebaut ist, in die Mikroprozessoruntereinheit 40 geladen werden.

Über einen Ausgang Al der Kontrolleinheit 38 wird das Eindüsventil 24 für das Reduktionsmittel 26 eingestellt. Die Einstellung der mittels des Eindüsventils 24 in das Abgas 10 einzudosierenden Reduktionsmittelmenge pro Zeiteinheit folgt dabei mit einem weitgehend stöchiometrischen Verhältnis von Stickoxiden zu Ammoniak, was nachstehend noch näher erläutert wird. Über einen Ausgang A2 der Kontrolleinheit 38 kann der Blaubrenner 28 bedarfsweise ein- und ausgeschaltet werden.

Bei Inbetriebnahme des Dieselmotors 4 wird mittels der Kontrolleinheit 38 durch Erfassung der mittels der Meßstelle 5 gemessenen Parameter am Eingang El der Stickoxidgehalt im Abgas 10 bestimmt. Mittels der Messung der Temperatur des Abgases 10 an den Meßstellen 6, 20 wird mittels der Kontrolleinheit 38 die Temperatur des Katalysators 8 bestimmt. Durch bedarfsweises Zuschalten des Blaubrenners 28, insbesondere kurz nach der Inbetriebnahme des Dieselmotors 4, wird der Katalysator 8 schnell auf eine zur katalytischen Umsetzung der Stickoxide mit Ammoniak vorteilhafte Temperatur eingestellt. Das Reduktionsmittel 26 wird entsprechend des ermittelten Stickoxidgehalts in das Abgas 10 eingedüst. Die hier vorliegende wäßrige Harnstofflösung hydrolisiert dabei in dem ebenfalls mit dem Blaubrennerabgas 36 temperierten Hydrolysekatalysator 14 zu Ammoniak und Wasser. Nach erfolgter Hydrolyse sind die Stickoxid- und die Ammoniakkonzentration nahezu gleich eingestellt. Ammoniak wird an dem katalytisch aktiven Material des DeNOₓ-Katalysators 16 adsorbiert. Treffen ein Stickoxid- und ein Ammoniakmolekül an einem katalytisch aktiven Zentrum zusammen, werden das Stickoxid- und das Ammoniakmolekül zusammen zu Stickstoff und Wasser umgesetzt.

Infolge der am DeNOₓ-Katalysator 16 nahezu gleich eingestellten Stickoxid- und Ammoniakkonzentration im Abgas 10 und einer nur bei etwa 90 % liegenden Abscheideleistung des DeNOₓ-Katalysators 16 werden etwa 10 % der zuvor in das Abgas 10 eingebrachten Ammoniakmenge am katalytisch aktiven Material des Katalysators 16 und am Sensormaterial des Sensors 46 adsorbiert. Hierbei dringen diese gespeicherten Moleküle in die Tiefe des katalytisch aktiven Materials und des Sensormaterials vor, weil die Abreaktion von Stickoxiden und Ammoniak in den oberflächennahen Schichten des katalytisch aktiven Materials verläuft. Auf diese Weise ergibt sich in Richtung zunehmender Materialtiefe sowohl am Sensormaterial als auch am katalytisch aktiven Material ein Verlauf der Konzentration des adsorbierten Ammoniaks, der zunächst von einer relativ hohen Konzentration in der Gasphase an der Oberfläche des Materials zu einem lokalen Minimum in Folge der Abreaktion hin abfällt und dann rasch zu einem Sättigungswert aufsteigt. Auf diese Weise ist es möglich, mit dem Sensor 46 diesen Verlauf und im besonderen die zeitliche Änderung der Dicke einer Reaktionszone zu erfassen. Hierbei ist die Dicke der Reaktionszone als die Materialtiefe definiert, bei der die Konzentration des am Sensormaterial adsorbierten Ammoniaks ein lokales Minimum durchläuft. Bereits kurz nach der Inbetriebnahme des Dieselmotors 4 werden zur Einstellung der in das Abgas 10 pro Zeiteinheit einzubringenden Reduktionsmittelmenge die Signale des Sensors 46 verwendet.

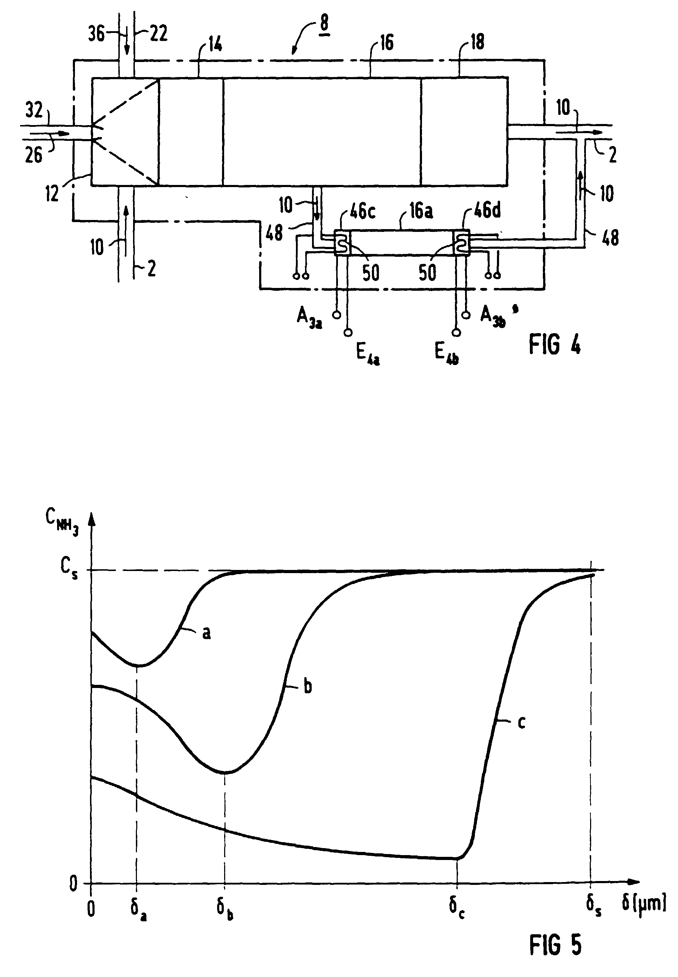

Unter Vorgriff auf Figur 5 entnimmt man drei typische Verläufe a bis c der Konzentration des am katalytisch aktiven Material adsorbierten Ammoniaks. Kurve a zeigt einen Verlauf, der sich einstellt, wenn die Konzentration des zudosierten Ammoniaks längere Zeit die Konzentration der im Abgas 10 enthaltenen Stickoxide übersteigt. Das katalytisch aktive Material speichert in seiner Tiefe bis zu einem druck- und temperaturabhängigen Sättigungswert Cₛ Ammoniak ein. Die Dicke der Reaktionszone liegt bei einem Wert δₐ, der relativ nahe an der Oberfläche des katalytisch aktiven Materials liegt. Würde dieser Betriebszustand so noch kurze Zeit beibehalten, wäre die Adsorptionsfähigkeit des katalytisch aktiven Materials für Ammoniak erschöpft. Dann würde Ammoniak als äußerst unerwünschter Schlupf aus dem Katalysator 8 austreten. Ebenfalls würden bei diesem Betriebszustand große Ammoniakmengen sehr plötzlich frei, wenn die Temperatur des Abgases 10 stark ansteigen würde, was mit einer Abnahme der spezifischen Speicherkapazität des katalytisch aktiven Materials für Ammoniak bei steigender Temperatur zusammenhängt. Die Kontrolleinheit 38 verringert daher in einer solchen Situation mittels der am Eingang E4 anliegenden Daten des Sensors 46 die pro Zeiteinheit in das Abgas eingebrachte Ammoniakmenge.

Auf diese Weise wird das am katalytisch aktiven Material gespeicherte Ammoniak in den oberflächlich angeordneten Schichten wieder zur katalytischen Umsetzung der Stickoxide verbraucht und es stellt sich ein Verlauf gemäß Kurve b ein. In diesem Fall beträgt die Dicke δ_{b} der Reaktionszone etwa 1/3 der Schichtdicke δₛ des Sensormaterials. Dieser Betriebszustand ist besonders flexibel bezüglich kurzfristig stark steigender oder fallender Stickoxidkonzentrationen, weil im Falle stark steigender Stickoxidkonzentrationen genügend Ammoniak am katalytisch aktiven Material gespeichert ist und im Fall stark abnehmender Stickoxidkonzentrationen vorläufig eine genügend hohe Speicherkapazität des katalytisch aktiven Materials für überschüssigen Ammoniak vorhanden ist. Der Betriebszustand gemäß dem Verlauf b zeichnet sich also durch einen größtmöglichen Abscheidegrad für Stickoxide bei vernachlässigbarem Ammoniakschlupf aus und wird daher beim Betrieb des Dieselmotors 4 mittels der Kontrolleinheit 38 eingestellt oder angestrebt.

Der Wert δ_{b} für die Dicke der Reaktionszone dient daher der Kontrolleinheit 38 als Sollwert, auf den die tatsächlich am katalytisch aktiven Material vorliegende Dicke der Reaktionszone eingestellt wird. Der noch zu diskutierende Kurvenverlauf c repräsentiert den Fall einer länger dauernden zu geringen Ammoniakzudosierung zum Abgas 10. Die am katalytisch aktiven Material adsorbierten Stickoxide müssen relativ tief in das katalytisch aktive Material vordringen, um überhaupt noch einen Reaktionspartner zu finden. Die Dicke δ_{c} der Reaktionszone bewegt sich daher in Richtung auf die Materialdicke δₛ hin. Bei diesem Betriebszustand ist ein hoher Stickoxidschlupf unvermeidlich. Die Kontrolleinheit 38 hebt in diesem Fall die pro Zeiteinheit in das Abgas 10 eindosierten Reduktionsmittelmengen kurzfristig drastisch an, um den Verlauf der Konzentration des am katalytisch aktiven Material adsorbierten Ammoniaks wieder mit dem Verlauf b nahezu zur Deckung zu bringen.

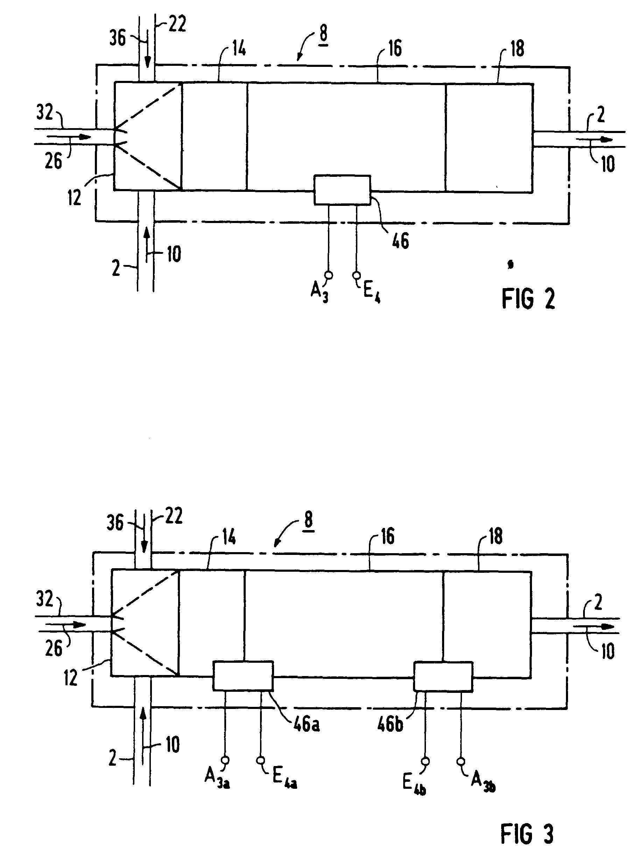

Figur 2 zeigt nochmals in Vergrößerung den Katalysator 8 gemäß der Figur 1. Hier wird deutlich, daß der Sensor 46 zur Erfassung der Dicke der Reaktionszone nach etwa 50 %, bezogen auf die Länge des DeNOx-Katalysators 16, im DeNOₓ-Katalysator 16 angeordnet ist. Bei der Ausgestaltung in Figur 2 ist es vorteilhaft, wenn der Sensor 46 in einem Intervall zwischen 30 und 90 %, vorzugsweise 50 bis 70 %, hier vorliegend etwa 50 %, bezogen auf die Länge des DeNOₓ-Katalysators 16, angeordnet ist. Auf diese Weise befindet sich in Strömungsrichtung des Abgases 10 hinter dem Sensor 46 noch ausreichend katalytisch aktives Material um einerseits überschüssiges Ammoniak 10 zu speichern und andererseits im Abgas 10 enthaltene Stickoxide mit Ammoniak katalytisch umzusetzen. Wie das katalytisch aktive Material des DeNOₓ-Katalysators 16 umfaßt das Sensormaterial des Sensors 46 geeignetes DeNOₓ-Material, z. B. Titandioxid und einen oder mehrere der Bestandteile Wolframoxid, Molybdänoxid, Vanadiumoxid und VₓMo_{y}O_{32 - z} mit x+y ≤ 12, x, y ≥ 1 und z ≤ 1. Damit entspricht die Adsorptionscharakteristik des Sensormaterials der des katalytisch aktiven Materials, wodurch eine Anpassung unterschiedlicher Adsorptionscharakteristika des Sensormaterials und des katalytisch aktiven Materials in der Kontrolleinheit 38 entfällt. Die ebenfalls am Eingang E4 anliegenden Daten zur Bestimmung der Temperatur des Sensors 46 werden zur Einstellung der Temperatur des Sensors 46, der beispielsweise über eine Widerstandsheizung beheizbar ist, herangezogen. Dabei wird die Temperatur des Sensors 46 innerhalb eines Temperaturbereiches von 250 bis 550 ° eingestellt. Innerhalb dieses Temperaturbereichs arbeitet auch das katalytisch aktive Material des DeNOₓ-Katalysators 16 vorteilhaft.

Eine alternative und nur geringfügig gegenüber der Figur 2 abgeänderte Variante sieht eine Anordnung von Sensoren 46a, 46b direkt am Anfang bzw. am Ende des DeNOₓ-Katalysators 16 vor. Der bisherige Eingang E4 teilt sich nun in Eingänge E4a und E4b und der bisherige Ausgang A3 teilt sich nun in die Ausgänge A3a und A3b auf. Mittels der am Eingang und am Ausgang des DeNOₓ-Katalysators 16 gemessenen Daten der Sensoren 46a bzw. 46b ist der Verlauf der Dicke der Reaktionszone über die Länge des DeNOₓ-Katalysators 16 interpolierbar. Auch hier ist es vorteilhaft, wenn die Dicke der Reaktionszone etwa auf den Wert δ_{b} in Figur 5 eingestellt wird, unter der Voraussetzung, daß die Schichtdicke des katalytisch aktiven Materials über die Länge des DeNOₓ-Katalysators 16 konstant bleibt oder sogar in Strömungsrichtung des Abgases 10 zunimmt.

Eine weitere alternative Ausgestaltung bezüglich der Anordnung von Sensoren 46c, 46d ist Figur 4 zu entnehmen. Etwa auf der Hälfte der Länge des DeNOₓ-Katalysators 16 wird ein kleiner Teil des Abgases 10 in einen Bypasskanal 48 abgezweigt, über die Sensoren 46c, 46d mit dazwischenliegendem DeNOₓ-Katalysator 16a geleitet und in Strömungsrichtung des Abgases 10 nach dem Oxidationskatalysator 18 wieder in die Abgasleitung 2 eingeleitet. Das im DeNOₓ-Katalysator 16a befindliche katalytisch aktive Material gleicht dem katalytisch aktiven Material des DeNOₓ-Katalysators 16. Auf diese Weise ist es beispielsweise möglich in dem Bypasskanal 48 die Sensoren 46c und 46d auf definierten Temperaturen zu temperieren, z. B. auf etwa 400 °C. Hierdurch wird der Verlauf der zeitlichen Änderung der Dicke der Reaktionszone repräsentativ für eine feste Temperatur verfolgt. In der Kontrolleinheit 38 erfolgt dann die Zudosierung des Reduktionsmittels 26 in Anpassung an die tatsächlich vorliegende Temperatur des DeNOₓ-Katalysators 16 und die daraus resultierende spezifische Speicherkapazität des katalytisch aktiven Materials. Zur Temperierung der Sensoren 46c, 46d können diese beispielsweise mit einer elektrischen mäanderförmig ausgebildeten Widerstandsheizung 50 versehen sein. Die Temperatur der Sensoren allgemein kann beispielsweise mit NiCr/Ni-Thermoelementen oder Pt100-Widerstandselementen gemessen werden. Um die Temperatur an den Sensoren 46c und 46d nahezu konstant zu halten, können zusätzlich Mittel zur Thermostatisierung des Strömungsmediums beispielsweise in dem Bypasskanal 48 vorgesehen sein.

## Patentansprüche

1. Verfahren zur Dosierung eines Reaktanten (26) in ein Strömungsmedium (10), bei dem eine Dicke (δₐ, δ_{b}, δ_{c}) einer Reaktionszone in einem katalytisch aktiven Material (16) erfaßt und eine pro Zeiteinheit in das Strömungsmedium (10) zuzudosierende Menge des Reaktanten (26) in Abhängigkeit von der Dicke (δₐ, δ_{b}, δ_{c}) einer Reaktionszone zur Umsetzung des Reaktanten (26) eingestellt wird.

2. Verfahren nach Anspruch 1,
**dadurch gekennzeichnet,** daß in Strömungsrichtung des Strömungsmediums (10) vor dem katalytisch aktiven Material (16) die Konzentration des Reaktanten (26) im Strömungsmedium (10) angehoben oder abgesenkt wird, wenn die Dicke (δₐ, δ_{b}, δ_{c}) der Reaktionszone, insbesondere ausgehend von einem Sollwert (δ_{b}) für die Dicke, zu- bzw. abnimmt.

3. Verfahren nach Anspruch 1 oder 2,
**dadurch gekennzeichnet,** daß ein Material, in dem die Dicke (δₐ, δ_{b}, δ_{c}) der Reaktionszone erfaßt wird, auf einer Temperatur von 250 bis 550 °C gehalten wird.

4. Einrichtung zur Dosierung eines Reaktanten (26) in ein Strömungsmedium (10), mit einer Kontrolleinheit (38), dieser Kontrolleinheit (38) zugeordneten Mitteln (46, 46a bis 46d) zur Erfassung der Dicke (δₐ, δ_{b}, δ_{c}) einer Reaktionszone in einem katalytisch aktiven Material eines Katalysators (16, 16a) zur Umsetzung des Reaktanten (26) und mit einer der Kontrolleinheit (38) zugeordneten Dosiereinrichtung, (24), mittels derer der Reaktant (26) in Strömungsrichtung eines Strömungsmediums (10) vor dem Katalysator (16, 16a) in das Strömungsmedium (10) einbringbar ist, wobei die Kontrolleinheit (38) zur Einstellung einer mittels der Dosiereinrichtung (24) pro Zeiteinheit in das Strömungsmedium (10) zuzudosierenden Menge des Reaktanten (26) in Abhängigkeit von der Dicke (δₐ, δ_{b}, δ_{c}) der Reaktionszone vorgesehen ist.

5. Einrichtung nach Anspruch 4,
**dadurch gekennzeichnet,** daß die Mittel (46) zur Erfassung der Dicke (δₐ, δ_{b}, δ_{c}) der Reaktionszone innerhalb eines Intervalls von 30 bis 90 %, bezogen auf die Länge des Katalysators (16), angeordnet sind.

6. Einrichtung nach Anspruch 5,
**dadurch gekennzeichnet,** daß sich das Intervall von 50 bis 70 % erstreckt.

7. Einrichtung nach Anspruch 4,
**dadurch gekennzeichnet,**
daß die Mittel (46a bis 46d) zur Erfassung der Dicke (δₐ, δ_{b}, δ_{c}) der Reaktionszone am Eintritt des Strömungsmediums (10) oder am Eintritt eines Teils des Strömungsmediums (10) in den Katalysator (16, 16a) und an dessen Austritt angeordnet sind.

8. Einrichtung nach einem der Ansprüche 4 bis 7,
**dadurch gekennzeichnet,** daß die Mittel (46, 46a bis 46d) zur Erfassung der Dicke (δₐ, δ_{b}, δ_{c}) der Reaktionszone beheizbar sind.

9. Einrichtung nach einem der Ansprüche 4 bis 8,
**dadurch gekennzeichnet,** daß Mittel zur Thermostatisierung des Strömungsmediums (10) vorgesehen sind.

## Claims

1. Method for metering a reactant (26) into a flow medium (10), in which method a thickness (δₐ, δ_{b}, δ_{c}) of a reaction zone in a catalytically active material (16) is detected and an amount of the reactant (26) that is to be metered into the flow medium (10) per unit of time is adjusted as a function of the thickness (δₐ, δ_{b}, δ_{c}) of a reaction zone for the conversion of the reactant (26).

2. Method according to claim 1, characterised in that upstream of the catalytically active material (16) in terms of the flow direction of the flow medium (10), the concentration of the reactant (26) in the flow medium (10) is raised or lowered if the thickness (δₐ, δ_{b}, δ_{c}) of the reaction zone, in particular starting from a setpoint value (δ_{b}) for the thickness, increases or decreases respectively.

3. Method according to claim 1 or 2, characterised in that a material in which the thickness (δₐ, δ_{b}, δ_{c}) of the reaction zone is detected is kept at a temperature of 250 to 550°C.

4. Device for metering a reactant (26) into a flow medium (10), having a control unit (38), means (46, 46a to 46d) allocated to this control unit (38) for detecting the thickness (δₐ, δ_{b}, δ_{c}) of a reaction zone in a catalytically active material of a catalytic converter (16, 16a) for the conversion of the reactant (26), and having a metering device (24) allocated to the control unit (38), by means of which metering device the reactant (26) can be put into the flow medium (10) upstream of the catalytic converter (16, 16a) in terms of the flow direction of a flow medium (10), with the control unit (38) being provided in order to adjust an amount of the reactant (26) that is to be metered into the flow medium (10) per unit of time by means of the metering device (24), as a function of the thickness (δₐ, δ_{b}, δ_{c}) of the reaction zone.

5. Device according to claim 4, characterised in that the means (46) for detecting the thickness (δₐ, δ_{b}, δ_{c}) of the reaction zone are arranged within an interval of 30 to 90%, in relation to the length of the catalytic converter (16).

6. Device according to claim 5, characterised in that the interval extends from 50 to 70%.

7. Device according to claim 4, characterised in that the means (46a to 46d) for detecting the thickness (δₐ, δ_{b}, δ_{c}) of the reaction zone are arranged at the inlet of the flow medium (10) or at the inlet of part of the flow medium (10) into the catalytic converter (16, 16a) and at the outlet thereof.

8. Device according to one of the claims 4 to 7, characterised in that the means (46, 46a to 46d) for detecting the thickness (δₐ, δ_{b}, δ_{c}) of the reaction zone can be heated.

9. Device according to one of the claims 4 to 8, characterised in that there are provided means for regulating the temperature of the flow medium (10).

## Revendications

1. Procédé pour ajouter de manière dosée un réactif (26) dans un fluide en écoulement (10), dans lequel on relève une épaisseur (δₐ, δ_{b}, δ_{c}) d'une zone de réaction dans une matière catalytiquement active (16), et on régie une quantité du réactif (26), devant être ajoutée de manière dosée dans le fluide en écoulement (10) par unité de temps, en fonction de l'épaisseur (δ_{a,} δ_{b,} δ_{c}) d'une zone de réaction destinée à la réaction des réactifs (26).

2. Procédé selon la revendication 1, caractérisé en ce que, en amont de la matière catalytiquement active (16) quand on regarde dans le sens de l'écoulement du fluide en écoulement (10), on augmente ou on diminue la concentration du réactif (26) dans le fluide en écoulement (10) quand l'épaisseur (δₐ, δ_{b}, δ_{c}) de la zone de réaction respectivement augmente ou diminue, en particulier à partir d'une valeur de consigne (δ_{b}) de l'épaisseur.

3. Procédé selon la revendication 1 ou 2, caractérisé en ce qu'un matériau dans lequel on relève (δ_{a,} δ_{b}, δ_{c}) de la zone de réaction est maintenu à une température de 250 à 550°C.

4. Dispositif pour ajouter de manière dosée un réactif (26) dans un fluide en écoulement (10), comportant une unité de commande (38), des moyens (46, 46a à 46d), affectés à cette unité de commande (38) et destinés à relever l'épaisseur (δ_{a,} δ_{b}, δ_{c}) d'une zone de réaction dans une matière catalytiquement active d'un pot catalytique (16, 16a) pour la réaction des réactifs (26), ainsi qu'un dispositif doseur (24), affecté à l'unité de commande (38), dispositif à l'aide duquel le réactif (26) peut, en amont du pot catalytique (16, 16a) quand on regarde dans le sens du fluide en écoulement (10), pénétrer dans le fluide en écoulement (10), l'unité de commande (38) étant prévue pour régler, en fonction de l'épaisseur (δₐ, δ_{b}, δ_{c}) de la zone de réaction, et à l'aide du dispositif doseur (24), la quantité du réactif (26) devant être ajoutée de manière dosée dans le fluide en écoulement (10) par unité de temps.

5. Dispositif selon la revendication 4, caractérisé en ce que les moyens (46) pour détecter l'épaisseur (δₐ, δ_{b}, δ_{c}) de la zone de réaction sont disposés dans un intervalle de 30 à 90 % par rapport à la longueur du pot catalytique (16).

6. Dispositif selon la revendication 5, caractérisé en ce que l'intervalle s'étend de 50 à 70 %.

7. Dispositif selon la revendication 4, caractérisé en ce que les moyens (46a à 46d) pour relever l'épaisseur (δₐ, δ_{b}, δ_{c}) de la zone de réaction sont disposés à l'entrée du fluide en écoulement (10) ou à l'entrée d'une partie du fluide en écoulement (10) dans le pot catalytique (16, 16a), et à sa sortie.

8. Dispositif selon l'une des revendications 4 à 7, caractérisé en ce que les moyens (46, 46a à 46d), destinés à relever l'épaisseur (δₐ, δ_{b}, δ_{c}) de la zone de réaction, peuvent être chauffés.

9. Dispositif selon l'une des revendications 4 à 8, caractérisé en ce que des moyens sont prévus pour thermostater le fluide en écoulement (10).
